(19) **Europäisches Patentamt / European Patent Office / Office européen des brevets**

(11) **EP 2 209 678 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(21) Anmeldenummer: **08852982.1**

(22) Anmeldetag: **29.10.2008**

(51) Int Cl.:
***B60T 7/04*** *(2006.01)* ***B60T 13/16*** *(2006.01)*
***B60T 13/74*** *(2006.01)*

(86) Internationale Anmeldenummer:
**PCT/EP2008/064662**

(87) Internationale Veröffentlichungsnummer:
**WO 2009/065709 (28.05.2009 Gazette 2009/22)**

(54) **BREMSBETÄTIGUNGSEINHEIT**

BRAKE ACTUATING UNIT

UNITÉ DE COMMANDE DE FREIN

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.11.2007 DE 102007055509**
**22.08.2008 DE 102008039306**

(43) Veröffentlichungstag der Anmeldung:
**28.07.2010 Patentblatt 2010/30**

(73) Patentinhaber: **Continental Teves AG & Co. OHG 60488 Frankfurt (DE)**

(72) Erfinder: **DRUMM, Stefan A.**
**55291 Saulheim (DE)**

(56) Entgegenhaltungen:
**EP-B- 1 638 830       DE-A1- 19 939 950**
**DE-A1-102007 018 469   US-A- 4 812 723**
**US-A1- 2003 024 245**

EP 2 209 678 B1

**Beschreibung**

Die vorliegende Erfindung betrifft eine Bremsbetätigungs-einheit, bestehend im Wesentlichen aus einem mittels eines Bremspedals betätigbaren Hauptbremszylinder, an den Radbremsen eines Kraftfahrzeugs anschließbar sind, einer dem Hauptbremszylinder vorgeschalteten Verstärkerstufe, die einer Bremspedalbetätigungskraft eine Hilfskraft additiv überlagert und mit der Summe aus beiden Kräften einen Hauptbremszylinderkolben betätigt, einer elektromechanischen Antriebseinheit zum Erzeugen der Hilfskraft, sowie mit einer Bremspedalbetätigungskraft-Ermittlungseinrichtung.

Eine derartige Bremsbetätigungseinheit ist beispielsweise aus der EP 1 638 830 B1 bekannt. Der Hauptbremszylinder und die Verstärkerstufe mit ihrem elektromechanischen Antrieb bilden einen Druckgenerator, der einen Bremsdruck erzeugt, der einer Summe einer vom Fahrzeugführer an einem Bremspedal erzeugten Betätigungskraft sowie einer von der Verstärkerstufe erzeugten Verstärkerkraft entspricht. Das Besondere an der vorbekannten Bremsbetätigungseinheit sind u. a. ein Eingangskraftsensor zum Erfassen eines die Betätigungskraft durch einen Fahrer repräsentierenden Signals sowie eine elektronische Steuereinheit, die in Abhängigkeit von vom Eingangskraftsensor gelieferten Signalen den elektromechanischen Antrieb der Verstärkerstufe ansteuert. Der Eingangskraftsensor ist bei der vorbekannten Betätigungseinheit in einer mit dem Bremspedal gekoppelten Kolbenstange integriert, die u. a. bei einem Ausfall der elektronischen Steuereinheit eine Betätigung des Hauptbremszylinders durch das Bremspedal ermöglicht. Der Eingangskraftsensor bewegt sich somit bei jeder Betätigung des Bremspedals mit der Kolbenstange mit. Als besonders nachteilig anzusehen sind bei der bekannten Bremsbetätigungseinheit deren hohe Herstellungskosten, die mit der Verwendung eines Kraftsensors verbunden sind. Sehr aufwändig ist auch der elektrische Anschluss des Kraftsensors an die elektronische Steuereinheit, weil dieser wie bereits erwähnt in die Kolbenstange integriert und mithin relativ zur elektronischen Steuereinheit beweglich angeordnet ist.

Es ist daher Aufgabe der vorliegenden Erfindung, eine Bremsbetätigungseinheit der eingangs genannten Gattung vorzuschlagen, bei der eine genaue Ermittlung der vom Fahrzeugführer aufgebrachten Pedalbetätigungskraft möglich ist, die kostengünstig realisierbar ist und insbesondere keinen elektrischen Anschluss beweglicher Komponenten benötigt.

Diese Aufgabe wird durch eine Bremsbetätigungseinheit nach dem kennzeichnenden Teil des Anspruchs 1 gelöst. Vorteilhafte Weiterbildungen der Erfindung sind in den abhängigen Ansprüchen angegeben.

Weitere Merkmale und Vorteile der Erfindung ergeben sich aus der nachfolgenden Beschreibung von vier bevorzugten Ausführungsbeispielen im Zusammenhang mit der beiliegenden Zeichnung. Die einander entsprechenden oder identischen Teile der beiden Ausführungsvarianten sind mit den gleichen Bezugzeichen bezeichnet. In der Zeichnung zeigen:

Fig. 1 eine schematische Darstellung einer ersten Ausführungsform des Erfindungsgegenstandes;

Fig. 2 eine schematische Darstellung einer zweiten Ausführungsform des Erfindungsgegenstandes;

Fig. 3 eine schematische Darstellung einer zweiten Ausführungsform des Erfindungsgegenstandes; und

Fig. 4 eine schematische Darstellung einer vierten Ausführungsform des Erfindungsgegenstandes.

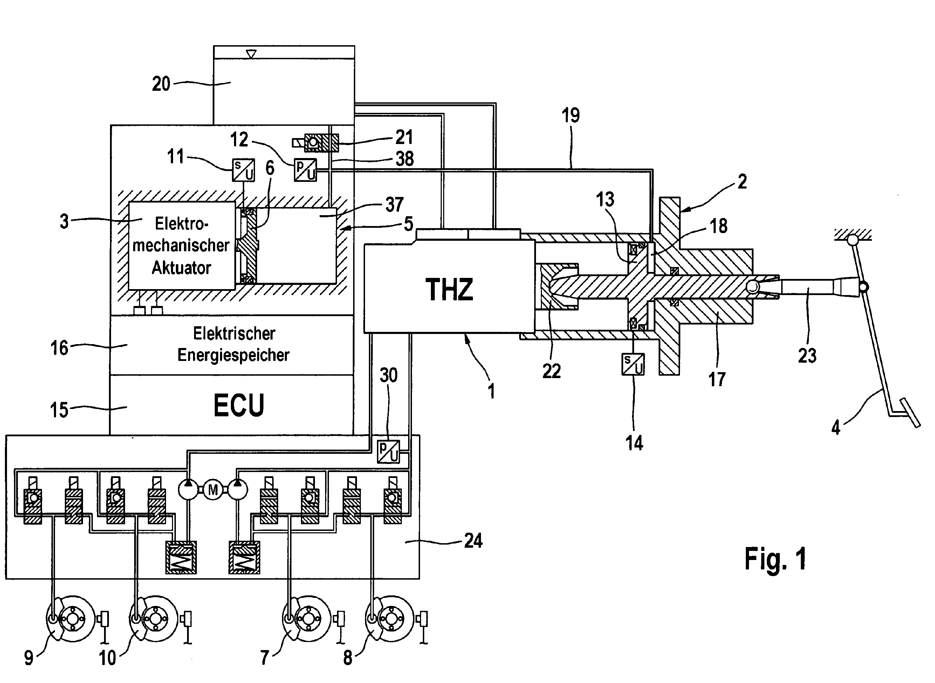

Die in Fig. 1 in einer schematischen Darstellung gezeigte Bremsbetätigungseinheit besteht im Wesentlichen aus einem Hauptbremszylinder 1, vorzugsweise einem Tandemhauptzylinder, einer dem Hauptbremszylinder 1 wirkungsmäßig vorgeschalteten Verstärkerstufe 2 sowie einer Antriebseinheit 3, die dem Antrieb der Verstärkerstufe 2 dient und durch einen Elektromotor gebildet ist. Zur Ansteuerung der erfindungsgemäßen Bremsbetätigungseinheit ist ein Bremspedal 4 vorgesehen, mit dem eine Kolbenstange 23 gekoppelt ist, die unter Zwischenschaltung eines Verstärkerkolbens 13 in kraftübertragender Verbindung mit einem ersten Kolben bzw. Primärkolben 22 des Hauptbremszylinders 1 steht. Der Primärkolben 22 begrenzt zusammen mit einem nicht gezeigten zweiten bzw. Sekundärkolben des Hauptbremszylinders nicht dargestellte Druckräume, an die unter Zwischenschaltung einer Raddruckmodulationseinrichtung 24 Radbremsen 7, 8, 9, 10 eines Kraftfahrzeuges angeschlossen sind. Der Verstärkerkolben 13 ist in einem Verstärkergehäuse 17 axial verschiebbar geführt und begrenzt dort einen hydraulischen Verstärkerraum, der mit dem Bezugzeichen 18 versehen ist. Die Kraftübertragung von der Antriebsstufe 3 zur Verstärkerstufe 2 erfolgt mittels einer elektrohydraulischen Zylinder-Kolben-Anordnung 5, deren Kolben 6 von einem elektromechanischen Aktuator bzw. Elektromotor angetrieben wird. Die Bremsbetätigungseinheit wird aus einem nicht dargestellten elektrischen Fahrzeugbordnetz mit elektrischer Energie versorgt. Um die Funktion der Bremsbetätigungseinheit nicht von der Verfügbarkeit des Fahrzeugbordnetzes abhängig zu machen, welches eine laut Pannenstatistik im Vergleich zu Bremssystemen hohe Ausfallrate aufweist, ist ein elektrischer Energiespeicher 16 vorgesehen, aus dem die elektronischen Regeleinheit 15 und der Elektromotor 3 mit gepufferter elektrischer Energie versorgt werden. Ein vom Kolben 6 begrenzter Druckraum 37 der Zylinder-Kolben-Anordnung 5 ist mittels einer Verbindungsleitung 19 mit dem vorhin erwähnten Verstärkerraum 18 verbunden, die ein Beaufschlagen des Verstärkerkolbens 13 mit einem im Druckraum 37 eingesteuerten Druck ermöglicht, woraus eine auf den Verstärkerkolben 13 einwirkende Verstärkungskraft

$F_{Verst}$ resultiert. Der Erfassung des im Druckraum 37 eingesteuerten Drucks dient ein an die Verbindungsleitung 19 angeschlossener Drucksensor 12. Ein Leitungsabschnitt 38 stellt in einem Ruhezustand der Bremsbetätigungseinheit eine hydraulische Verbindung der durch die Leitung 19 verbundenen hydraulischen Räume 37 und 18 mit einem drucklosen Druckmittelvorratsbehälter 20 her. Der Leitungsabschnitt 38 ist mittels eines vorzugsweise elektromagnetisch betätigbaren 2/2-Wegeventils 21 absperrbar. Der Erfassung des vom Kolben 6 der Zylinder-Kolben-Anordnung 5 zurück gelegten Weges $S_1$ dient ein Wegsensor 11, während der vom Verstärkerkolben 13 zurück gelegte Weg $S_2$ wird von einem zweiten Wegsensor 14 erfasst wird. Mit Hilfe der Korrelation beider Wegsignale kann im Betrieb der Bremsbetätigungseinheit die Integrität der Leitungsverbindung 19 und die Absperrfunktion des Ventils 21 festgestellt werden. Der bei der Betätigung im Hauptbremszylinder 1 eingesteuerte Druck wird mit einem Drucksensor 30 ermittelt, der im gezeigten Beispiel in der Raddruckmodulationseinrichtung 24 integriert ist. Wie einem auf dem einschlägigen technischen Gebiet tätigen Fachmann bekannt ist, erfüllt der Verstärkerkolben 13 die Funktion eines Additionsgliedes, das die Summenkraft

$$F_{Bet,Hz} = F_{Ped,Bet} + F_{Verst}$$

auf den Primärkolben 22 des Hauptbremszylinders überträgt. Die beiden vorhin genannten Drucksensoren 12, 30 bilden eine Bremspedalbetätigungskraft-Ermittlungseinrichtung, deren Funktion im nachfolgenden Text erläutert wird. Die oben beschriebene erste Variante der Erfindung hat den Vorteil, dass sowohl die Betätigungskraft $F_{Bet,Hz}$ des Hauptbremszylinders 1 als auch die Verstärkungskraft $F_{Verst}$ mit in der Kraftfahrzeug-Bremsentechnik bewährten Drucksensoren erfasst werden kann. Außerdem ist vorteilhaft, dass die elektrohydraulische Zylinder-Kolben-Anordnung 5 in einem separaten Modul angeordnet werden kann. Beispielsweise kann sie zusammen mit der elektronischen Regeleinheit 15 der nachgeschalteten Raddruckmodulationseinrichtung 24 zugeordnet werden, die als ABS- bzw. ESP-Aggregat ausgeführt sein kann. Dadurch ist es auch möglich, die elektronische Regeleinheit 15 in einem nicht dargestellten elektronischen ABS-ESP-Regler zu integrieren.

Das Prinzip der Ermittlung der am Bremspedal 4 wirkenden Pedalbetätigungskraft $F_{Ped,Bet}$ ist die vorhin beschriebene Gleichung, wonach die gesuchte Pedalbetätigungskraft

$$F_{Ped,Bet} = F_{Bet,Hz} - F_{Verst}$$

ist. Die angedeutete Subtraktion erfolgt rechnerisch in der vorhin erwähnten elektronischen Regeleinheit 15. Dabei wird ausgenutzt, dass die Summenkraft $F_{Bet,Hz}$ zu dem vom zweiten Drucksensor 39 gemessenen hydraulischen Druck $p_{Hz}$ und die Verstärkungskraft $F_{Verst}$ dem vom ersten Drucksensor 12 gemessen hydraulischen Druck im Verstärkerraum 18 proportional sind. Die für die Berechnung erforderlichen Parameter, insbesondere Proportionalitätsfaktoren sind in der elektronischen Regeleinheit 15 abgelegt. Ansonsten ist der Fachmann mit der Funktion der beschriebenen Bremsanlage vertraut, so dass sich eine ausführliche Beschreibung erübrigt.

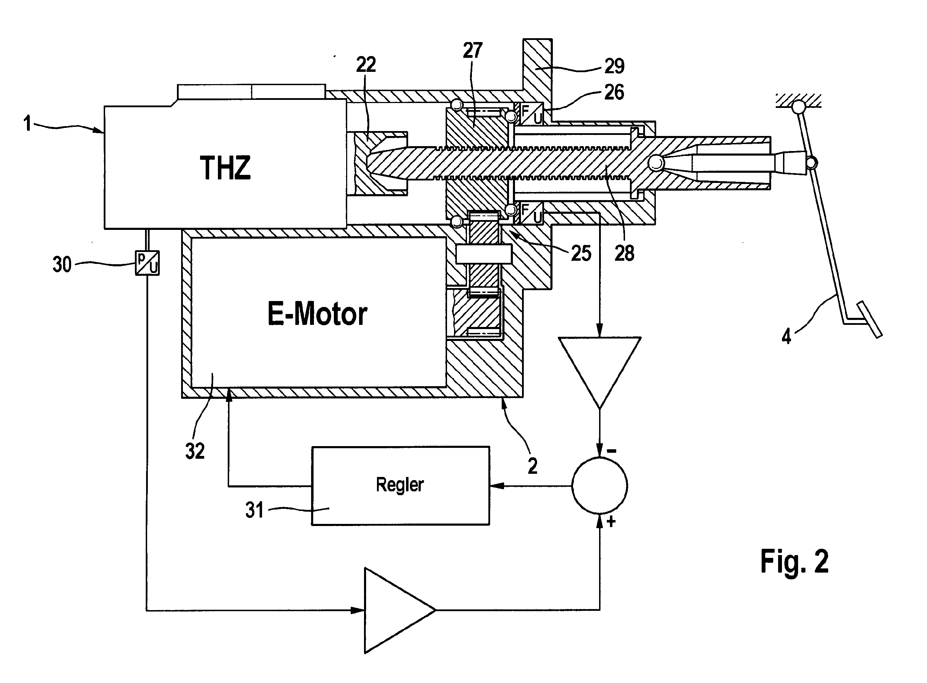

Bei der in Fig. 2 dargestellten zweiten Ausführung der Erfindung ist die Verstärkerstufe 2 durch ein Untersetzungsgetriebe 25 gebildet, die als ein Kugel-Gewindetrieb 27, 28 ausgeführt ist. Dabei wird die Gewindemutter 27 von einem als Antrieb dienenden Elektromotor 32 angetrieben, während die Gewindespindel 28 einerseits mit dem Bremspedal 4 und andererseits mit dem Primärkolben 22 des Hauptbremszylinders 1 kraftübertragend verbunden ist.

Ein gehäusefest angeordneter Kraftsensor 26 ermittelt bei der Betätigung der in Fig. 2 gezeigten Bremsbetätigungseinheit die Kraft $F_{Abstüts}$, mit der sich die axial unbewegliche, angetriebene Gewindemutter 27 an einem den Kugelgewindetrieb 25 bzw. 27, 28 sowie den Antriebsmotor 32 aufnehmenden Verstärkergehäuse 29 abstützt. Die erwähnte Abstützkraft ist gleich der die vom Kugelgewindetrieb 27, 28 erzeugten Verstärkungskraft. Zur Ermittlung der gesuchten Pedalbetätigungskraft $F_{Bet,Ped}$ wird diese Kraft zusammen mit der Ausgangsgröße des im Zusammenhang mit Fig. 1 erwähnten Drucksensors 30 einer elektronischen Regeleinheit 31 zugeführt, die aus dem vom Drucksensor 30 gelieferten Druckwert $p_{Hz}$ die am Primärkolben 22 wirkende Hauptbremszylinder-Betätigungskraft $F_{Bet,Hz}$ berechnet.

In einem abschließenden Schritt zur Ermittlung der gesuchten Bremspedalbetätigungskraft $F_{Bet,Ped}$ wird von der Hauptbremszylinder-Betätigungskraft $F_{Bet,Hz}$ die Verstärkungskraft im Sinne der im Zusammenhang mit der oben beschriebenen ersten Ausführung der Erfindung aufgestellten Gleichung subtrahiert.

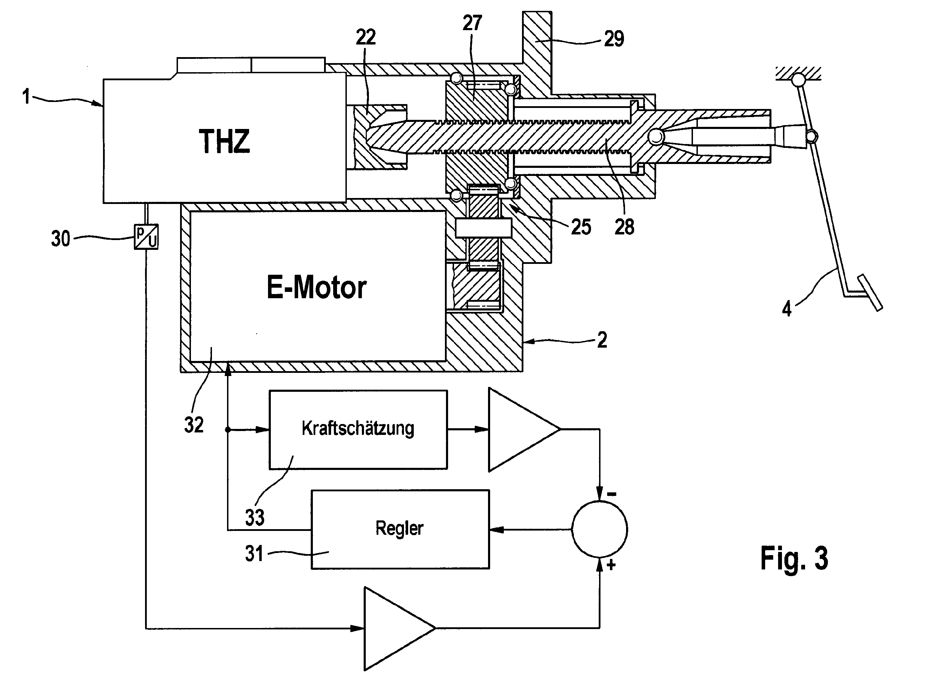

Der Aufbau der in Fig. 3 dargestellten dritten Ausführungsform der Erfindung entspricht weitgehend dem Aufbau der im vorher gehenden Absatz beschriebenen zweiten Ausführung. Der einzige Unterschied besteht darin, dass anstelle des Kraftsensors zur Ermittlung der vorhin erwähnten Abstützkraft eine Einrichtung 33 zu deren Schätzung vorgesehen ist, wobei die Ausgangsgröße der Einrichtung 33 bei der Berechnung der Pedalbetätigungskraft $F_{Bet,Ped}$ anstelle des Signals des Kraftsensors 26 verwendet wird. Die der Ansteuerung des Antriebsmotors 32 dienende Ausgangsgröße der elektronischen Regeleinheit 31 wird als Eingangsgröße der Einrichtung 33 zur Kraftschätzung zugeführt.

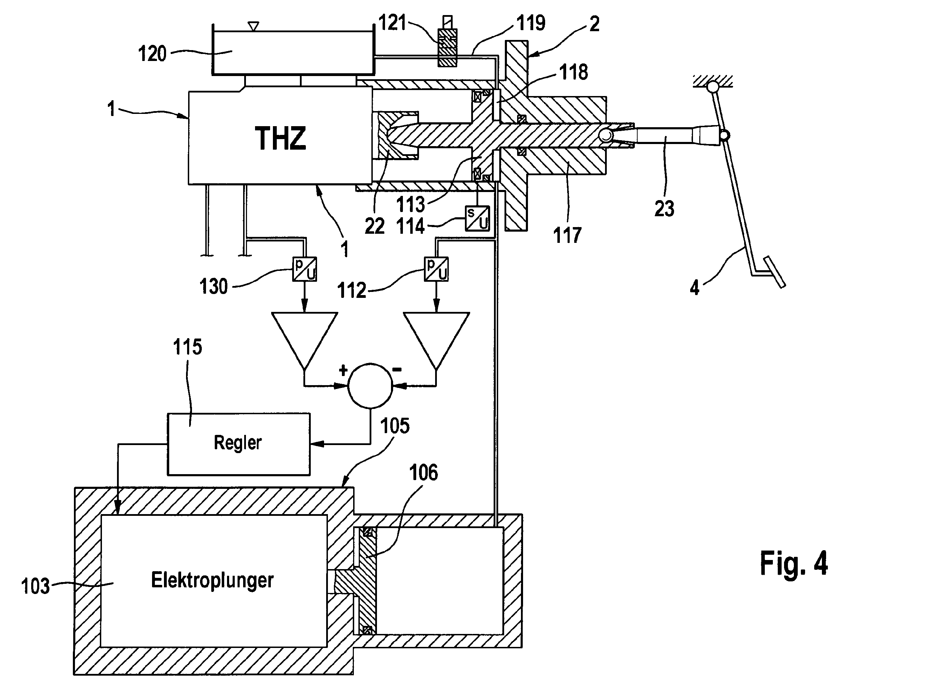

Die in Fig. 4 gezeigte vierte Ausführungsform der Erfindung weist im Wesentlichen alle technischen Merkmale auf, die im Zusammenhang mit der in Fig. 1 beschriebenen ersten Ausführung des Erfindungsgegenstandes erläutert wurden und deren Bezugszeichen gegenüber den Bezugszeichen gemäß Fig. 1 um 100 erhöht wurden. Besonders harausgearbeitet wurde in dieser Darstellung die vorgeschlagene Aufbereitung der die Hauptbremszylinder-Betätigungskraft $F_{Bet,Hz}$ und die Verstärkungskraft $F_{Verst}$ repräsentierenden Signale und deren Subtraktion zur Bildung eines Signals für die Pedalbetätigungskraft $F_{Bet,Ped}$. Die in diesem Zusammenhang weniger wichtigen Komponenten Energiespeicher (16 in Fig. 1) sowie der den Weg des Kolbens 106 erfassende Wegsensor (11 in Fig. 1) wurden weggelassen.

**Patentansprüche**

1. Bremsbetätigungseinheit, bestehend in wesentlichen aus einem mittels eines Bremspedals (4) betätigbaren Hauptbremszylinder (1), an den Radbremsen (7 - 10) eines Kraftfahrzeugs anschließbar sind, einer dem Hauptbremszylinder (1) vorgeschalteten Verstärkerstufe (2), die einer Bremspedalbetätigungskraft eine Hilfskraft additiv überlagert und mit der Summe aus beiden Kräften einen Hauptbremszylinderkolben (22) betätigt, einer elektromechanischen Antriebseinheit (3) zum Erzeugen der Hilfskraft, sowie mit einer Bremspedalbetätigungskraft-Ermittlungseinrichtung, **dadurch gekennzeichnet, dass** die Bremspedalbetätigungskraft-Ermittlungseinrichtung eine Hilfskraft-Ermittlungseinrichtung (12, 112, 26, 33) und einen den Druck des Hauptbremszylinders (1) erfassenden Drucksensor (30, 130)) umfasst, wobei ein Bremspedalbetätigungskraftsignal ($F_{Bet,Ped}$) durch die Auswertung von Ausgangssignalen des Drucksensors (30, 130) und der Hilfskraft-Ermittlungseinrichtung (12, 112, 26, 33) ermittelt wird.

2. Bremsbetätigungseinheit nach Anspruch 1, **dadurch gekennzeichnet, dass** die von der elektromechanischen Antriebseinheit (3) erzeugte Hilfskraft ($F_{Verst}$) mittels einer hydraulischen Einrichtung (5, 105) zur Verstärkerstufe (2) übertragen wird und die Hilfskraft-Ermittlungseinrichtung einen Drucksensor (12, 112) umfasst, der den Druck der hydraulischen Einrichtung (5, 105) erfasst.

3. Bremsbetätigungseinheit nach Anspruch 1, **dadurch gekennzeichnet, dass** die von der elektromechanischen Antriebseinheit (32) erzeugte Hilfskraft ($F_{Verst}$) mittels einer mechanischen Einrichtung (25) zur Verstärkerstufe (2) übertragen wird und die Hilfskraft-Ermittlungseinrichtung einen Kraftsensor (26) umfasst, der die von der mechanischen Einrichtung (25) ausgeübte Kraft ($F_{Abstütz}$) erfasst.

4. Bremsbetätigungseinheit nach Anspruch 1, **dadurch gekennzeichnet, dass** die von der elektromechanischen Antriebseinheit (3) erzeugte Hilfskraft ($F_{Verst}$) mittels einer mechanischen Einrichtung (25) zur Verstärkerstufe (2) übertragen wird und die Hilfskraft-Ermittlungseinrichtung eine Einrichtung (33) umfasst, die aus Ansteuerungssignalen und Zustandsgrößen der elektromechanischen Antriebseinheit (3) die Hilfskraft schätzt.

5. Bremsbetätigungseinheit nach einem der Ansprüche 1 bis 4 **dadurch gekennzeichnet, dass** die Ausgangssignale des Drucksensors (30, 130) sowie der Hilfskraft-Ermittlungseinrichtung (12, 112, 26, 33) einer elektronischen Regeleinheit (15, 115, 31) zugeführt werden, die der Ansteuerung der Antriebseinheit (3) der Verstärkerstufe (2) dient.

6. Bremsbetätigungseinheit nach Anspruch 5 **dadurch gekennzeichnet, dass** zur elektrischen Energieversorgung der elektronischen Regeleinheit (15) und der Antriebseinheit (3) ein elektrischer Energiespeicher (16) vorgesehen ist.

7. Bremsbetätigungseinheit nach Anspruch 2 **dadurch gekennzeichnet, dass** die Verstärkerstufe (2) einen Verstärkerkolben (13, 113) aufweist, der in einem Verstärkergehäuse (17, 117) einen Verstärkerraum (18, 118) begrenzt, der mittels einer absperrbaren hydraulischen Verbindung (19, 119) mit einem drucklosen Druckmittelvorratsbehälter (20, 120) verbunden ist.

8. Bremsbetätigungseinheit nach Anspruch 7 **dadurch gekennzeichnet, dass** zum Absperren der Verbindung (19, 119) ein elektromagnetisch betätigbares, stromlos offenes (SO-) 2/2-Wegeventil (21, 121) vorgesehen ist.

9. Bremsbetätigungseinheit nach Anspruch 7 oder 8 **dadurch gekennzeichnet, dass** ein den Weg ($S_2$) des Verstärkerkolbens (13, 113) erfassender Wegsensor (14, 114) vorgesehen ist, dessen Ausgangssignal der elektronischen Regeleinheit zugeführt wird.

10. Bremsbetätigungseinheit nach Anspruch 7 oder 8 **dadurch gekennzeichnet, dass** ein Wegsensor (11) vorgesehen ist, der den Betätigungsweg () der hydraulischen Einrichtung (5, 105) erfasst und dessen Ausgangssignal der elektronischen Regeleinheit zugeführt wird.

11. Bremsbetätigungseinheit nach Anspruch 9 oder 10 **dadurch gekennzeichnet, dass** die erfassten Wegsignale verwendet werden, um aus Wegsignaländerungen auf bevorstehende Kraftsignaländerungen, insbesondere eine Bremspedalbetätigungskraftsignaländerung zu schließen.

12. Bremsbetätigungseinheit nach Anspruch 9 oder 10 **dadurch gekennzeichnet, dass** die erfassten Wegsignale verwendet werden, um aus den Korrelationen zwischen Weg- und Kraftsignalen bzw. von Wegsignalen untereinander die Integrität der Bremsbetätigungseinheit zu überprüfen.

13. Bremsbetätigungseinheit nach Anspruch 3 **dadurch gekennzeichnet, dass** die mechanische Einrichtung (25) durch ein Untersetzungsgetriebe gebildet ist, wobei der Kraftsensor (26) die Kraft ($F_{Abstütz}$) erfasst, mit der sich ein kraftübertragendes Teil (27) des Untersetzungsgetriebes (25) an einem Verstärkergehäuse (29) abstützt.

14. Bremsbetätigungseinheit nach Anspruch 3 oder 13 **dadurch gekennzeichnet, dass** das Untersetzungsgetriebe (25) als ein Kugelgewindetrieb ausgebildet ist, der durch einen Elektromotor (32) angetrieben wird.

15. Bremsbetätigungseinheit nach Anspruch 13 oder 14 **dadurch gekennzeichnet, dass** das kraftübertragende Teil des Untersetzungsgetriebes (25) durch die Gewindemutter (27) des Kugelgewindetriebs gebildet ist.

16. Bremsbetätigungseinheit nach Anspruch 15 **dadurch gekennzeichnet, dass** die Hilfskraft-Ermittlungseinrichtung als eine Einrichtung (33) zum Schätzen der Kraft ($F_{Abstütz}$) aus Ansteuerungssignalen und Zustandsgrößen der elektromechanischen Antriebseinheit (3) ausgebildet ist, mit der sich das kraftübertragende Teil (27) des Untersetzungsgetriebes (25) am Verstärkergehäuse (29) abstützt.

17. Bremsbetätigungseinheit nach einem der vorhergehenden Ansprüche **dadurch gekennzeichnet, dass** die elektronische Regeleinheit (15, 115, 31) Mittel zur Berechnung der am Hauptzylinderkolben (22) wirkenden Hauptzylinder-Betätigungskraft ($F_{Bet,Hz}$) aus dem im Hauptbremszylinder (1) eingesteuerten hydraulischen Druck ($p_{Hz}$) sowie zur Berechnung der Bremspedalbetätigungskraft ($F_{Bet,Ped}$) durch Subtraktion der Hilfskraft ($F_{Verst}$) oder der Abstützkraft ($F_{Abstütz}$) von der am Hauptzylinderkolben (22) wirkenden Hauptzylinder-Betätigungskraft ($F_{Bet,Hz}$) aufweist.

**Claims**

1. Brake actuating unit, consisting essentially of a brake master cylinder (1) which is actuatable by means of a brake pedal (4) and to which wheel brakes (7 - 10) of a motor vehicle can be connected, of a booster stage (2) which is connected upstream of Brake master cylinder (1) and which additively superposes an auxiliary force on a brake pedal actuation force and actuates a brake master cylinder piston (22) with the sum of both forces, of an electromechanical drive unit (3) for generating the auxiliary force, and with a device for determining a brake pedal actuation force, **characterized in that** the device for determining Brake pedal actuation force includes an auxiliary force determining device (12, 112, 26, 33) and a pressure sensor (30, 130) which detects the pressure of Brake master cylinder (1), a brake pedal actuation force signal ($F_{Bet,Ped}$) being determined by evaluation of output signals of the pressure sensor (30, 130) and of the auxiliary force determining device (12, 112, 26, 33).

2. Brake actuating unit according to Claim 1, **characterized in that** the auxiliary force (Fverst) generated by the electromechanical drive unit (3) is transmitted by means of a hydraulic device (5, 105) to the booster stage (2), and the auxiliary force determining device includes a pressure sensor (12, 112) which detects the pressure of the hydraulic device (5, 105).

3. Brake actuating unit according to Claim 1, **characterized in that** the auxiliary force ($F_{Verst}$) generated by the electromechanical drive unit (32) is transmitted by means of a mechanical device (25) to the booster stage (2), and the auxiliary force determining device includes a force sensor (26) which detects the force ($F_{Abstütz}$) exerted by the mechanical device (25).

4. Brake actuating unit according to Claim 1, **characterized in that** the auxiliary force ($F_{Verst}$) generated by the electromechanical drive unit (3) is transmitted by means of a mechanical device (25) to the booster stage (2), and the auxiliary force determining device includes a device (33) which estimates the auxiliary force from activation signals and state variables of the electromechanical drive unit (3).

5. Brake actuating unit according to any one of Claims 1 to 4, **characterized in that** the output signals of the pressure sensor (30, 130) and of the auxiliary force determining device (12, 112, 26, 33) are supplied to an electronic control unit (15, 115, 31) which is used to activate the drive unit (3) of the booster stage (2).

6. Brake actuating unit according to Claim 5, **characterized in that** an electrical energy accumulator (16) is provided for supplying electrical energy to the electronic control unit (15) and the drive unit (3).

7. Brake actuating unit according to Claim 2, **characterized in that** the booster stage (2) has a booster piston (13, 113) which delimits in a booster housing (17, 117) a booster chamber (18, 118) which is connected by means of a blockable hydraulic connection (19, 119) to an unpressurized pressure medium reservoir (20, 120).

**8.** Brake actuating unit according to Claim 7, **characterized in that** an electromagnetically activatable, currentlessly open (SO) 2/2-way valve (21, 121) is provided for blocking the connection (19, 119).

**9.** Brake actuating unit according to Claim 7 or 8, **characterized in that** there is provided a displacement sensor (14, 114) which detects the travel ($S_2$) of the booster piston (13, 113), the output signal of which displacement sensor (14, 114) is supplied to the electronic control unit.

**10.** Brake actuating unit according to Claim 7 or 8, **characterized in that** there is provided a displacement sensor (11) which detects the actuation travel of the hydraulic device (5, 105) and the output signal of which is supplied to the electronic control unit.

**11.** Brake actuating unit according to Claim 9 or 10, **characterized in that** the displacement signals detected are used to infer impending force signal changes, in particular a change in Brake pedal actuation force signal, from displacement signal changes.

**12.** Brake actuating unit according to Claim 9 or 10, **characterized in that** the displacement signals detected are used to check the integrity of Brake actuating unit from the correlations between displacement and force signals and between displacement signals among themselves.

**13.** Brake actuating unit according to Claim 3, **characterized in that** the mechanical device (25) is formed by a reduction gear, the force sensor (26) detecting the force ($F_{Abstütz}$) with which a force-transmitting part (27) of the reduction gear (25) is supported against a booster housing (29).

**14.** Brake actuating unit according to Claim 3 or 13, **characterized in that** the reduction gear (25) is in the form of a ball screw drive which is driven by an electric motor (32).

**15.** Brake actuating unit according to Claim 13 or 14, **characterized in that** the force transmitting part of the reduction gear (25) is formed by the threaded nut (27) of the ball screw drive.

**16.** Brake actuating unit according to Claim 15, **characterized in that** the auxiliary force determining device is configured as a device (33) for estimating the force ($F_{Abstütz}$) with which the force-transmitting part (27) of the reduction gear (25) is supported against the booster housing (29) from activation signals and state variables of the electromechanical drive unit (3).

**17.** Brake actuating unit according to any one of the preceding claims, **characterized in that** the electronic control unit (15, 115, 31) includes means for calculating the master cylinder actuation force ($F_{Bet,Hz}$) acting on the master cylinder piston (22) from the hydraulic pressure ($p_{Hz}$) induced in Brake master cylinder (1), and for calculating Brake pedal actuation force ($F_{Bet,ped}$) by subtracting the auxiliary force ($F_{Verst}$) or the support force ($F_{Abstütz}$) from the master cylinder actuation force ($F_{Bet,Hz}$) acting on the master cylinder piston (22).

**Revendications**

**1.** Unité d'actionnement de frein constituée essentiellement
d'un cylindre principal de frein (1) apte à être actionné au moyen d'une pédale de frein (4) et auquel les freins de roues (7 - 10) d'un véhicule automobile peuvent être raccordés,
d'un étage d'amplification (2) raccordé en amont du cylindre principal de frein (1), qui superpose par addition une force auxiliaire à la force d'actionnement exercée sur la pédale de frein et qui actionne un piston (22) de cylindre principal de frein par la somme des deux forces,
d'une unité électromécanique d'entraînement (3) qui délivre la force auxiliaire ainsi qu'un dispositif de détermination de la force d'actionnement appliquée sur la pédale de frein,
**caractérisée en ce que**
le dispositif de détermination de la force d'actionnement appliquée sur la pédale de frein comporte un dispositif (12, 112, 26, 33) de détermination de la force auxiliaire et un détecteur de pression (30, 130) qui détecte la pression qui règne dans le cylindre principal de frein (1) et
**en ce qu'**un signal ($F_{Bet,Ped}$) de force d'actionnement appliquée sur la pédale de frein est déterminé par évaluation des signaux de sortie du détecteur de pression (30, 130) et du dispositif (12, 112, 26, 33) de détermination de la force auxiliaire.

**2.** Unité d'actionnement de frein selon la revendication 1, **caractérisée en ce que** la force auxiliaire ($F_{Verst}$) délivrée par l'unité d'entraînement électromécanique (3) est transmise au moyen d'un dispositif hydraulique (5, 105) à l'étage d'amplification (2) et **en ce que** le dispositif de détermination de la force auxiliaire comporte un détecteur de pression (12, 112) qui détecte la pression qui règne dans le dispositif hydraulique (5, 105).

**3.** Unité d'actionnement de frein selon la revendication 1, **caractérisée en ce que** la force auxiliaire ($F_{Verst}$) délivrée par l'unité électromécanique d'entraînement (32) est transmise au moyen d'un dispositif mécanique (25) à l'étage d'amplification (2) et **en ce que** le dispositif de détermination de la force auxiliaire comporte un détecteur de force (26) qui détecte la force ($F_{Abstütz}$) exercée par le dispositif mécanique (25).

4. Unité d'actionnement de frein selon la revendication 1, **caractérisée en ce que** la force auxiliaire (Fverst) délivrée par l'unité électromécanique d'entraînement (3) est transmise au moyen d'un dispositif mécanique (25) à l'étage d'amplification (2) et **en ce que** le dispositif de détermination de la force auxiliaire comporte un dispositif (33) qui estime la force auxiliaire à partir de signaux de commande et de grandeurs d'état de l'unité électromécanique d'entraînement (3).

5. Unité d'actionnement de frein selon l'une des revendications 1 à 4, **caractérisée en ce que** les signaux de sortie du détecteur de pression (30, 130) ainsi que du dispositif (12, 112, 26, 33) de détermination de la force auxiliaire sont apportés à une unité électronique de régulation (15, 115, 31) qui sert à commander l'unité d'entraînement (3) de l'étage d'amplification (2).

6. Unité d'actionnement de frein selon la revendication 5, **caractérisée en ce qu'**une réserve (16) d'énergie électrique est prévue pour alimenter en énergie électrique l'unité électronique de régulation (15) et l'unité d'entraînement (3).

7. Unité d'actionnement de frein selon la revendication 2, **caractérisée en ce que** l'étage d'amplification (2) présente un piston d'amplification (13, 113) qui délimite dans un boîtier d'amplification (17, 117) un espace d'amplification (18, 118) relié au moyen d'un conduit hydraulique (19, 119) apte à être bloqué à un récipient (20, 120) de réserve de fluide non sous pression.

8. Unité d'actionnement de frein selon la revendication 7, **caractérisée en ce qu'**une soupape à 2/2 voies (21, 121) actionnée électriquement et ouverte en l'absence de courant (SO - ) est prévue pour bloquer la liaison (19, 119).

9. Unité d'actionnement de frein selon les revendications 7 ou 8, **caractérisée en ce qu'**elle présente un détecteur de course (14, 114) qui détecte la course ($s_2$) du piston d'amplification (13, 113) et dont le signal est apporté à l'unité électronique de régulation.

10. Unité d'actionnement de frein selon les revendications 7 ou 8, **caractérisée en ce qu'**elle présente un détecteur de course (11) qui détecte la course d'actionnement du dispositif hydraulique (5, 105) et dont le signal de sortie est apporté à l'unité électronique de régulation.

11. Unité d'actionnement de frein selon les revendications 9 ou 10, **caractérisée en ce que** les signaux de course qui ont été détectés sont utilisés pour conclure à partir de modifications du signal de course à des modifications précédentes des signaux de force et en particulier à une modification du signal de force d'actionnement de la pédale de frein.

12. Unité d'actionnement de frein selon les revendications 9 ou 10, **caractérisée en ce que** les signaux de course qui ont été détectés sont utilisés pour vérifier l'intégrité de l'unité d'actionnement de frein à partir des corrélations entre les signaux de course et de force ou entre les signaux de course.

13. Unité d'actionnement de frein selon la revendication 3, **caractérisée en ce que** le dispositif mécanique (25) est formé par une transmission réductrice, le détecteur de force (26) détectant la force ($F_{Abstütz}$) avec laquelle une partie (27) de transmission de force de la transmission réductrice (25) s'appuie sur un boîtier d'amplification (29).

14. Unité d'actionnement de frein selon les revendications 3 ou 13, **caractérisée en ce que** la transmission réductrice (25) est configurée comme transmission à billes et tige filetée entraînée par un moteur électrique (32).

15. Unité d'actionnement de frein selon les revendications 13 ou 14, **caractérisée en ce que** la partie de transmission de force de la transmission réductrice (25) est formée par l'écrou fileté (27) de la transmission à billes et tige filetée.

16. Unité d'actionnement de frein selon la revendication 15, **caractérisée en ce que** le dispositif de détermination de la force auxiliaire est configuré comme dispositif (33) qui estime à partir de signaux de commande et de grandeurs d'état de l'unité électromécanique d'entraînement (3) la force ($F_{Abstütz}$) avec laquelle la partie (27) de transmission de force de la transmission réductrice (25) s'appuie sur le boîtier d'amplification (29).

17. Unité d'actionnement de frein selon l'une des revendications précédentes, **caractérisée en ce que** l'unité électronique de régulation (15, 115, 31) présente des moyens qui calculent à partir de la pression hydraulique ($p_{HZ}$) commandée dans le cylindre principal de frein (1) la force d'actionnement ($F_{Bet,Hz}$) du cylindre principal qui agit sur le piston (22) du cylindre principal qui calculent la force ($F_{Bet,Ped}$) d'actionnement de la pédale de frein en soustrayant la force auxiliaire ($F_{Verst}$) ou la force de soutien ($F_{Abstütz}$) de la force ($F_{Bet,Hz}$) d'actionnement du cylindre principal qui agit sur le piston (22) du cylindre principal.

Fig. 1

THZ

Elektromechanischer Aktuator

Elektrischer Energiespeicher

ECU

Fig. 2

Fig. 3

EP 2 209 678 B1

Fig. 4

EP 2 209 678 B1

**EP 2 209 678 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1638830 B1